# EUROPEAN PATENT SPECIFICATION

(11) **EP 4 525 429 B1**
(45) Date of publication and mention of the grant of the patent: **15.07.2026**
(21) Application number: 22943861.9
(22) Date of filing: 23.05.2022
(51) Int. Cl.: H04N 5/63, H04N 21/422, G06F 1/3231, G06F 1/3234

(54) **DISPLAY DEVICE**
ANZEIGEVORRICHTUNG
DISPOSITIF D'AFFICHAGE

(43) Date of publication of application: 19.03.2025
(73) Proprietor: LG Electronics Inc., Yeongdeungpo-gu Seoul 07336 (KR)
(72) Inventor: KANG, Heechen, Seoul 06772 (KR); PARK, Kyudong, Seoul 06772 (KR)
(74) Representative: Schornack, Oliver
(86) International application number: PCT/KR2022/007294
(87) International publication number: WO 2023/229054

(56) References cited:
- WO-A1-2020/187050
- JP-A- 2021 044 909
- KR-A- 20140 144 885
- KR-A- 20200 079 981
- KR-A- 20210 128 697
- KR-A- 20220 012 593
- US-A1- 2015 179 176

## Description

### [Technical Field]

The present disclosure relates to a display device.

### [Background Art]

Recently, display devices function as AI speakers or BT speakers, or operate even when the power is off for controlling IoT devices, and the like, and a certain amount of power is required for this. Prior art document US 2015/0179176 A1 relates to a display apparatus comprising a display, a power supply, and a main controller, and discloses operation in different power states, including a normal operating mode and a standby or power-saving mode. Document WO 2020/187050 A1 discloses a display device operable in a standby mode and a running mode, wherein limited services remain active in the standby mode, for example to enable voice-based wake-up functionality.

However, in order to reduce power consumption in the power-off state, the voltage supplied to the component responsible for the operation of the display device, such as the SoC (System on Chip), may be output in a sawtooth waveform. However, when the voltage is supplied in a sawtooth waveform like this, the voltage may be repeatedly charged and discharged in the capacitor installed between the voltage supply circuit and the SoC, and as a result, the PCB equipped with the SoC and capacitor may vibrate, causing noise.

In order to reduce this noise, in the case that a DC voltage is supplied to the SoC, there is a disadvantage in that power consumption increases. In addition, although noise can be improved by adding a separate capacitor to the output terminal of the power supply circuit, this has the disadvantage of increasing cost.

Therefore, a noise reduction method that can minimize the increase in power consumption and reduce manufacturing costs is required.

### [Invention]

### [Technical Problem]

The purpose of the present disclosure is to provide a display device that minimizes the problem described above.

The purpose of the present disclosure is to provide a display device that can reduce noise when operating in a low-power mode.

### [Technical Solution]

The invention is set out in the appended claims. The implementations described below are not all claimed, they are included to help understanding the context of the invention. While the description often refers of embodiments, the embodiments of the invention are those which comprise at least all the features of an independent claim. Any embodiment which does not fall within the scope of the claims does not form part of the invention, but is rather included as an illustrative example that is useful for understanding the invention.

### [Effect of the Invention]

According to various embodiments of the present disclosure, by reducing the magnitude of the voltage input to the controller under specific conditions in a low-power mode, there is an advantage of minimizing noise while minimizing degradation of the SoC's lifespan.

According to various embodiments of the present disclosure, by adjusting the magnitude of the voltage input to the controller based on ambient noise, recognition of a voice command, current time, and the like, there is an advantage of minimizing user inconvenience due to noise while preventing degradation of the SoC's lifespan due to voltage amplitude adjustment in unnecessary situations.

### [Description of Drawings]

FIG. 1 is a block diagram illustrating a configuration of a display device according to an embodiment of the present disclosure.
FIG. 2 is a block diagram illustrating a remote-control device according to an embodiment of the present disclosure.
FIG. 3 is a diagram illustrating an actual configuration of a remote-control device according to an embodiment of the present disclosure.
FIG. 4 is a diagram illustrating an example of utilizing a remote-control device according to an embodiment of the present disclosure.
FIG. 5 is a diagram illustrating a method of supplying power when the display device according to an embodiment of the present disclosure operates in the normal mode
FIG. 6 is a diagram illustrating a method of supplying power when the display device according to an embodiment of the present disclosure operates in the low-power mode.
FIG. 7 is a diagram illustrating an example of a waveform output from the power supply circuit when the display device according to an embodiment of the present disclosure operates in the low-power mode.
FIG. 8 is a flowchart illustrating an operating method of the display device according to an embodiment of the present disclosure.
FIG. 9 is a flowchart illustrating a method for variably controlling a voltage input to the controller by the display device according to a first embodiment of the present disclosure.
FIG. 10 is a diagram illustrating an example of a table used when operating in the method illustrated in FIG. 9.
FIG. 11 is a flowchart illustrating a method for variably controlling a voltage input to the controller by the display device according to a second embodiment of the present disclosure.
FIG. 12 is a flowchart illustrating a method for controlling a voltage input to the controller by the display device according to a third embodiment of the present disclosure.
FIG. 13 is a flowchart illustrating a method for variably controlling a voltage input to the controller by the display device according to a fourth embodiment of the present disclosure.
FIG. 14 is a graph illustrating noise measured when the display device operates according to various embodiments of the present disclosure.

### [Best Mode]

The video/audio (hereinafter, A/V) transmission device according to an embodiment of the present disclosure is an intelligent device that adds a computerassisted function to a broadcast reception function, for example, and while remaining faithful to the broadcast reception function, it may have an Internet function, and the like, and may have a more convenient interface such as a manual input device, a touch screen, or a space remote-control.

In addition, the device may perform functions such as email, web browsing, banking, or games by connecting to the Internet and a computer with the support of a wired or wireless Internet function. A standardized general-purpose OS may be used for these various functions.

Therefore, the A/V transmission device described in the present disclosure may perform various user-friendly functions since various applications may be freely added or deleted on, for example, a general-purpose OS kernel.

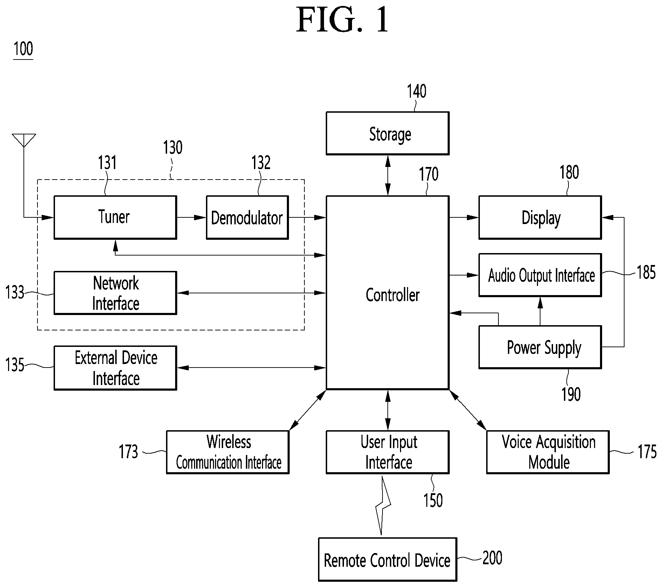

FIG. 1 is a block diagram illustrating a configuration of a display device according to an embodiment of the present disclosure.

Referring to FIG. 1, a display device 100 may include a broadcast reception module 130, an external device interface 135, a memory 140, a user input interface 150, a controller 170, a wireless communication interface 173, a microphone 175, a display 180, a speaker 185, and a power supply circuit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into video signals, audio signals, and broadcast program-related data signals, and may restore the divided video signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wirely connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. That is, the network interface 133 may transmit or receive data to or from a corresponding server by accessing a predetermined webpage through the network.

The network interface 133 may receive content or data provided from a content provider or a network operator. That is, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote-control device 200 or transmit control signals from the controller 170 to the remote-control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not shown) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

The wireless communication circuit 173 may perform wired or wireless communication with an external device. The wireless communication circuit 173 may perform short-range communication with an external device. For this, the wireless communication circuit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, or Wireless Universal Serial Bus (USB) technologies. The wireless communication circuit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or interworking) with the display device 100. The wireless communication circuit 173 may detect (or recognize) a wearable device capable of communication around the display device 100.

Furthermore, in the case that the detected wearable device is a device authenticated to communicate with the display device 100, the controller 170 may transmit at least part of data processed in the display device 100 to the wearable device through the wireless communication circuit 173. Therefore, a user of the wearable device may use the data processed by the display device 100 through the wearable device.

The microphone 175 may acquire audio. The microphone 175 acquire audio around the display device 100.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 shown in FIG. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

The speaker 185 receives the audio-processed signal from the controller 170 to output an audio signal.

The power supply circuit 190 supplies the corresponding power to the entire display device 100. Particularly, power may be supplied to the controller 170 that is capable of being implemented in the form of a system on chip (SOC), the display 180 for displaying an image, the speaker 185 for outputting audio, and the like.

Specifically, the power supply circuit 190 may include a converter that converts AC power to DC power and a DC/DC converter that converts a level of the DC power.

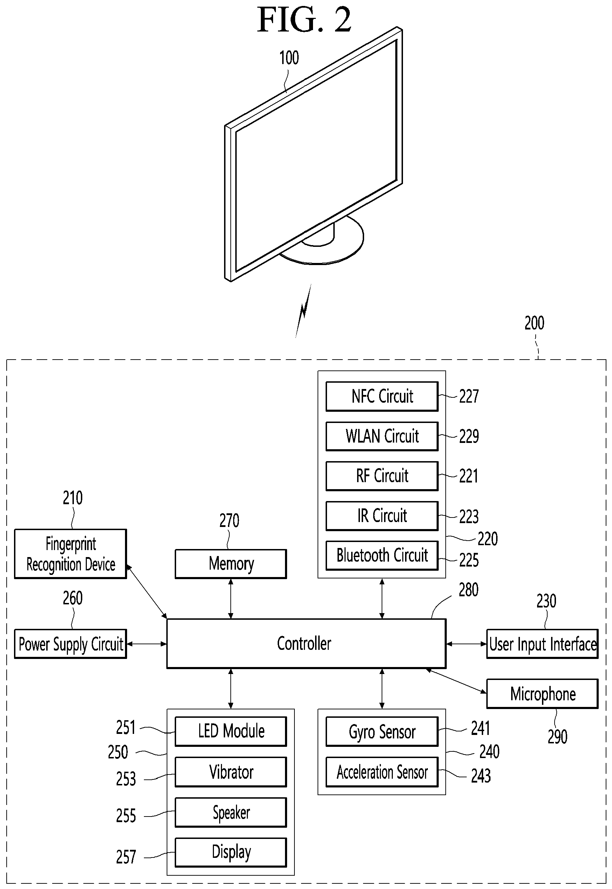

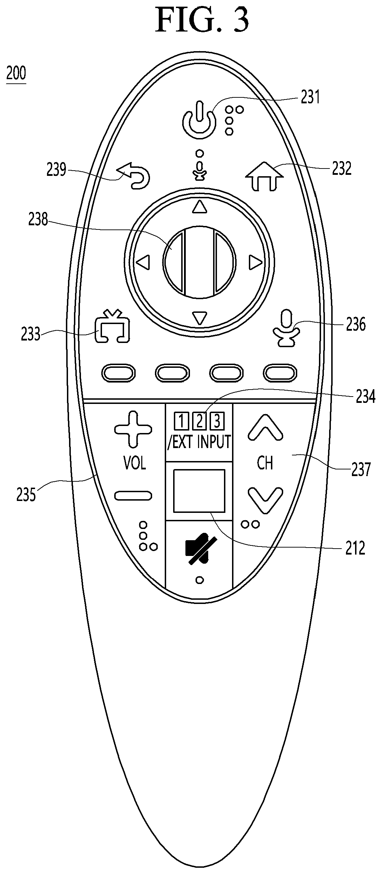

A remote-control device according to an embodiment of the present disclosure will be described with reference to FIGS. 2 and 3.

FIG. 2 is a block diagram illustrating a remote-control device according to an embodiment of the present disclosure and FIG. 3 is a diagram illustrating an actual configuration of a remote-control device according to an embodiment of the present disclosure.

First, referring to FIG. 2, a remote-control device 200 may include a fingerprint recognition device 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 transmits/receives signals to/from an arbitrary any one of display devices according to the above-mentioned embodiments of the present disclosure.

The remote-control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote-control device 200 may include a Bluetooth circuit 225 capable of transmitting or receiving signals to or from the display device 100 according to a Bluetooth communication standard. In addition, the remote-control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote-control device 200 may transmit signals containing information on the movement of the remote-control device 200 to the display device 100 through the wireless communication circuit 220.

Moreover, the remote-control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote-control device 200. If the user input interface 230 includes a hard key button, a user may input a command relating to the display device 100 to the remote-control device 200 through the push operation of the hard key button. This will be described with reference to FIG. 3.

Referring to FIG. 3, the remote-control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

In the case that the user input interface 230 includes a touch screen, a user may touch a soft key of the touch screen to input a command relating to the display device 100 to the remote-control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote-control device 200.

For example, the gyro sensor 241 may sense information on an operation of the remote-control device 200 on the basis of x, y, and z axes and the acceleration sensor 243 may sense information on a movement speed of the remote-control device 200. Moreover, the remote-control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED module 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication circuit 220.

The power supply circuit 260 supplies power to the remote-control device 200 and if the remote-control device 200 does not move for a predetermined time, stops the power supply, so that power waste may be reduced.

The power supply circuit 260 may resume the supply of power in the case that a predetermined key provided at the remote-control device 200 is operated.

The memory 270 may store various kinds of programs and application data required to control or operate the remote-control device 200.

In the case that the remote-control device 200 transmits/receives signals wirelessly through the display device 100 and the RF module 221, the remote-control device 200 and the display device 100 transmits/receives signals through a predetermined frequency band.

The controller 280 of the remote-control device 200 may store, in the memory 270, information on a frequency band for transmitting/receiving signals to/from the display device 100 paired with the remote-control device 200 and refer to it.

The controller 280 controls general matters relating to the control of the remote-control device 200. The controller 280 may transmit a signal corresponding to a predetermined key operation of the user input interface 230 or a signal corresponding to the movement of the remote-control device 200 sensed by the sensor 240 to the display device 100 through the wireless communication circuit 220.

In addition, the microphone 290 of the remote-control device 200 may acquire voice.

A plurality of the microphone 290 may be provided.

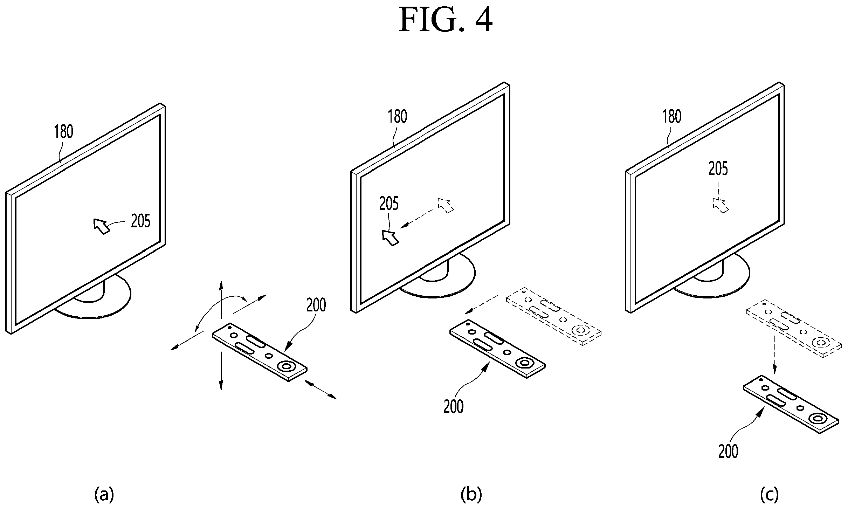

Next, FIG. 4 is described.

FIG. 4 is a diagram illustrating an example of utilizing a remote-control device according to an embodiment of the present disclosure.

FIG. 4(a) illustrates that a pointer 205 corresponding to the remote-control device 200 is displayed on the display 180.

A user may move or rotate the remote-control device 200 vertically or horizontally. The pointer 205 displayed on the display 180 of the display device 100 corresponds to a movement of the remote-control device 200. Since the corresponding pointer 205 is moved and displayed according to a movement on a 3D space as show in the drawing, the remote-control device 200 may be referred to as a spatial remote-control device.

FIG. 4(b) illustrates that if a user moves the remote-control device 200, the pointer 205 displayed on the display 180 of the display device 100 is moved to the left according to the movement of the remote-control device 200.

Information on a movement of the remote-control device 200 detected through a sensor of the remote-control device 200 is transmitted to the display device 100. The display device 100 may calculate the coordinates of the pointer 205 from the information on the movement of the remote-control device 200. The display device 100 may display the pointer 205 to match the calculated coordinates.

FIG. 4(c) illustrates that while a specific button in the remote-control device 200 is pressed, a user moves the remote-control device 200 away from the display 180. Thus, a selected region in the display 180 corresponding to the pointer 205 may be zoomed in and displayed in an enlarged size.

On the other hand, if a user moves the remote-control device 200 close to the display 180, a selection area in the display 180 corresponding to the pointer 205 may be zoomed out and displayed in a reduced size.

On the other hand, in the case that the remote-control device 200 is moved away from the display 180, a selection area may be zoomed out and in the case that the remote-control device 200 is moved closer to the display 180, a selection area may be zoomed in.

In addition, in the case that a specific button in the remote-control device 200 is pressed, recognition of a vertical or horizontal movement may be excluded. That is, in the case that the remote-control device 200 is moved away from or closer to the display 180, the up, down, left, or right movement cannot be recognized and only the back-and-forth movement may be recognized. While a specific button in the remote-control device 200 is not pressed, only the pointer 205 is moved according to the up, down, left or right movement of the remote-control device 200.

Moreover, the moving speed or moving direction of the pointer 205 may correspond to the moving speed or moving direction of the remote-control device 200.

Furthermore, a pointer in this specification means an object displayed on the display 180 in response to an operation of the remote-control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

Meanwhile, the display device 100 according to the embodiment of the present disclosure may operate in various operation modes. For example, the display device 100 may operate in at least one of a normal mode, a standby mode, or a low-power mode.

The normal mode may be an operation mode in which content is output on the display 180 so that a user may view the content.

The standby mode may be an operation mode in which the display device 100 waits to be switched to the normal mode immediately upon receiving a user command, and the like. The controller 170 may control the display device 180 so that information indicating that the current operation mode is the standby mode is displayed while operating in the standby mode. In addition, the controller 170 may provide a lower operation mode such as a frame mode and a clock mode when operating in the standby mode. The controller 170 may receive a user input that sets the display device 100 to operate in either the frame mode or the clock mode when operating in the standby mode.

The low-power mode may be an operation mode when the display device 100 is powered off. The low-power mode may be a mode that operates when a power-off signal is received through a remote-control device 200 or when a predetermined period of time has passed without receiving user input in standby mode. Meanwhile, even when operating in the low-power mode, power is required to perform some functions (e.g., AI speaker, Bluetooth speaker, IoT device control, etc.).

Meanwhile, the normal mode, the standby mode, and the low-power mode are named only for the convenience of description, so it is reasonable not to be limited to these names. For example, the normal mode may be named as a video viewing mode, the standby mode may be named as an AOD (Always On Display) mode, and the low-power mode may be named as an AR (Always Ready) mode.

Meanwhile, as described above, power is required to perform some functions even in the low-power mode, so the controller 170 may receive a predetermined amount of power from the power supply circuit 190 even while operating in the low-power mode. However, since the power required for operation in the low-power mode is smaller than the power required for operation in the normal mode or standby mode, the power supply circuit 190 may supply power to the controller 170 differently depending on the operation mode.

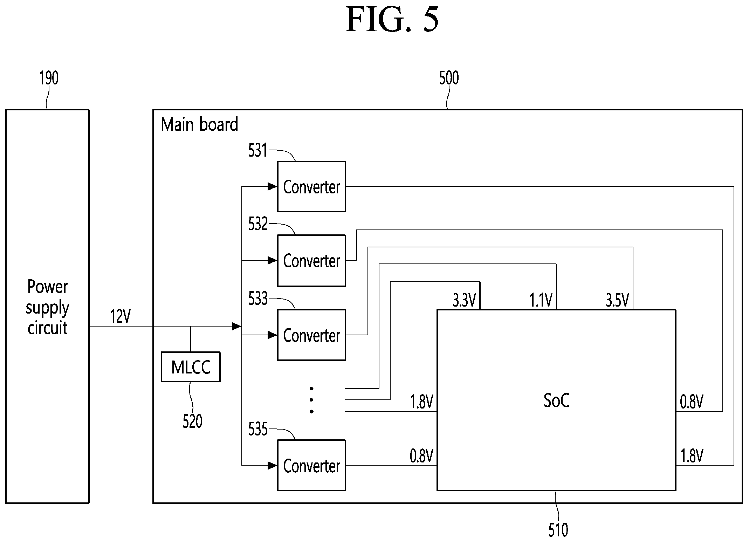

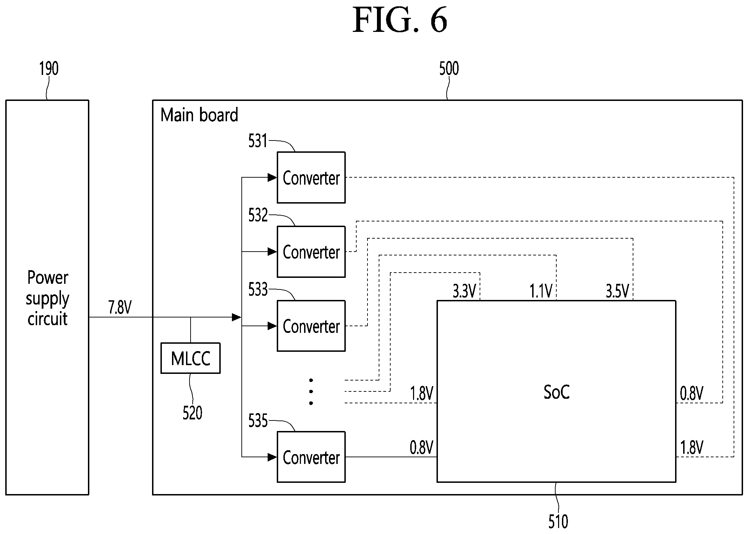

Next, with reference to FIGS. 5 and 6, a method of supplying power to the controller 170 depending on the operation mode of the display device 100 will be described.

FIG. 5 is a diagram illustrating a method of supplying power when the display device according to an embodiment of the present disclosure operates in the normal mode, and FIG. 6 is a diagram illustrating a method of supplying power when the display device according to an embodiment of the present disclosure operates in the low-power mode.

According to one embodiment, the controller 170 may be implemented in the form of an SoC 510, and the SoC 510 may be a system on chip. Therefore, the power supply circuit 190 may supply power to the SoC 510 in which the controller 170 is implemented. That is, in this specification, supplying power to the controller 170 and supplying power to the SoC 510 may be used interchangeably with the same meaning. And, the SoC 510 in which the controller 170 is implemented may be mounted on the main board 500.

First, referring to FIG. 5, a method in which the power supply circuit 190 supplies power to the controller 170 when operating in the normal mode will be described. Meanwhile, FIG. 5 assumes the normal mode, but power may also be supplied in the standby mode as described in FIG. 5.

The power supply circuit 190 may output a voltage of a first magnitude when operating in the normal mode. For example, the first magnitude may be 12 V, but this is only an example and is not limited thereto. And, the voltage of the first magnitude output from the power supply circuit 190 in the normal mode may be direct current. That is, in the normal mode, the power supply circuit 190 may output a DC voltage of the first size. Therefore, the controller 170 may receive a DC voltage from the power supply circuit 190.

Meanwhile, the voltage output from the power supply circuit 190 may be converted into power through a plurality of converters 531, 532, 533, and 535, and the converted power may be supplied to the SoC 510. For example, the voltage of 12 V output from the power supply circuit 190 may be converted into voltages of 1.2 V, 0.8 V, 3.5 V, 1.1 V, 3.3 V, and 1.8 V through the plurality of converters 531, 532, 533, and 535 and supplied to the SoC 190. That is, through power conversion, voltage may be supplied to the SoC 510 by converting it into a size required by each of the many elements included in the SoC 510.

Meanwhile, the main board 500 may be equipped with an MLCC (Multi-Layer Ceramic Condenser, Multi-Layer Ceramic Capacitor). The MLCC 520 is a multilayer ceramic capacitor that controls current to flow at a constant rate and may include at least one capacitor.

Meanwhile, when operating in the low-power mode, the output from the power supply circuit 190 may be changed. Next, with reference to FIG. 6, a method for the power supply circuit 190 to supply power to the controller 170 when operating in a low-power mode will be described.

The power supply circuit 190 may output a second magnitude of voltage when operating in the low-power mode. At this time, the second magnitude may be smaller than the first magnitude output from the power supply circuit 190 when operating in a normal mode. For example, the second magnitude may be 7.8 V, but this is merely exemplary and therefore it is reasonable that it is not limited thereto. This is because the power required for the operation of the controller 170 in the low-power mode is less than the power required for the operation of the controller 170 in the normal mode.

In addition, the second magnitude voltage output from the power supply circuit 190 in the low-power mode may be an AC voltage. That is, the power supply circuit 190 may output an AC voltage of the second magnitude in the low-power mode. Therefore, the controller 170 may receive an AC voltage from the power supply circuit 190.

Meanwhile, the waveform of the AC voltage output from the power supply circuit 190 may be various. For example, the power supply circuit 190 may output an AC voltage in a waveform such as a sawtooth, triangle, sine, or square.

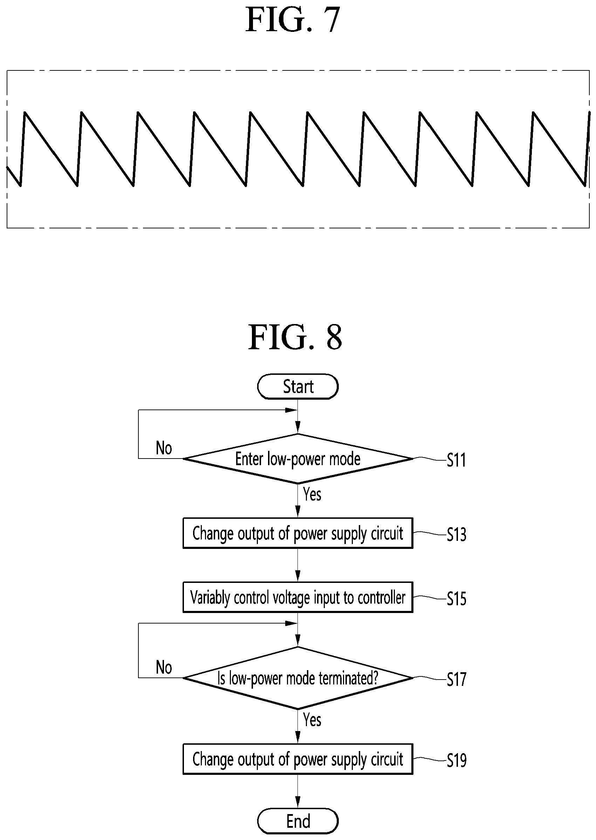

FIG. 7 is a diagram illustrating an example of a waveform output from the power supply circuit when the display device according to an embodiment of the present disclosure operates in the low-power mode.

As shown in FIG. 7, the power supply circuit 190 may output an AC voltage of a sawtooth waveform. Meanwhile, this waveform is only an example, and the power supply circuit 190 may output an AC voltage of a different waveform.

In this way, the power supply circuit 190 may consume only a minimum power required in the low-power mode by outputting a voltage having a voltage amplitude smaller than the voltage amplitude in the normal mode.

In the low-power mode, only some of the various components included in the SoC 510 operate, so the required power may be small. In addition, since only some of the various components included in the SoC 510 operate, only some of the plurality of converters 531, 532, 533, and 535 mounted on the main board 500 may operate.

Again, referring to the example of Fig. 6, only some converters 535 may convert the voltage output from the power supply circuit 190 to a predetermined size (e.g., 0.8 V) and supply it to the SoC 510. In other words, only some converters 535 may receive the voltage output from the power supply circuit 190, convert this, and supply this to the SoC 510.

Meanwhile, in the low-power mode, since the AC voltage is output from the power supply circuit 190, the capacitor (not shown) included in the MLCC 520 repeats charging and discharging. However, in the case that the capacitor (not shown) repeats charging and discharging, a vibration phenomenon, that is, a shaking phenomenon, may occur. In addition, due to the vibration of this capacitor (not shown), resonance may occur in the main board 500, and there is a problem that noise is caused by this. In particular, this noise is generated when operating in low-power mode, that is, in an environment where no sound is produced due to the display device 100 being powered off, and thus may cause significant user inconvenience. Therefore, a method for reducing noise when operating in low-power mode is required.

The display device 100 according to an embodiment of the present disclosure attempts to reduce noise by varying the voltage input to the controller 170 when operating in the low-power mode.

FIG. 8 is a flowchart illustrating an operating method of the display device according to an embodiment of the present disclosure.

The controller 170 may obtain whether to enter the low-power mode (step S11).

The controller 170 may operate in the normal mode in which an image is output on the display 180 or in the low-power mode according to a power-off command. Of course, the controller 170 may also operate in an operating mode other than the normal mode and the low-power mode for example, the standby mode. The controller 170 may terminate the normal mode and enter the low-power mode when it receives a power-off command while operating in the normal mode or the standby mode.

The controller 170 may determine whether it has entered the low-power mode.

When the controller 170 enters the low-power mode, the controller 170 may change the output of the power supply circuit 190 (step S13).

The power supply circuit 190 may supply power to at least one of the components provided in the display device 100, such as the display 180 or the controller 170.

When the controller 170 enters the low-power mode, the controller 170 may change the output of the power supply circuit 190. For example, the controller 170 may change the first magnitude DC voltage output from the power supply circuit 190 in the normal mode to the second magnitude AC voltage smaller than the first magnitude when entering the low-power mode. That is, the controller 170 may control the power supply circuit 190 so that the output changes from a DC voltage of the first magnitude to an AC voltage of the second magnitude when entering the low-power mode.

The controller 170 may variably control the voltage input to the controller 170 (step S15).

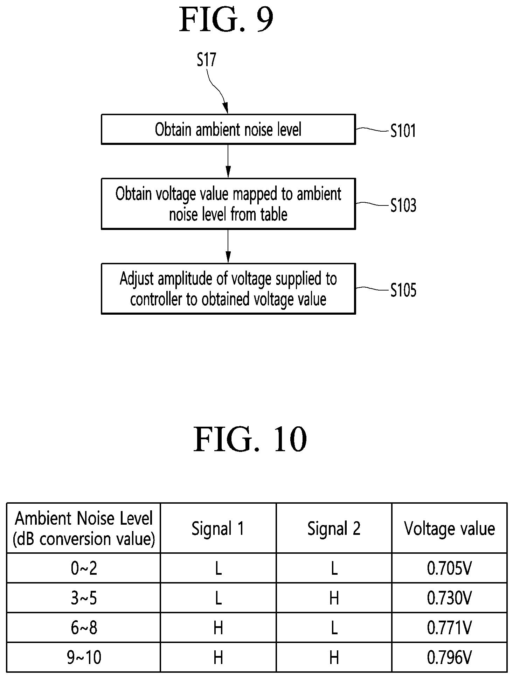

That is, the controller 170 may variably control the voltage input to the SoC 510. A method for variably inputting the voltage input to the controller 170 will be described in detail in FIGS. 9 to 13.

The controller 170 may obtain whether the low-power mode is terminated (step S17).

The controller 170 may switch to the normal mode or the standby mode when the controller 170 receives a power-on command or a confirmation key input command while operating in the low-power mode. The controller 170 may determine that the low-power mode is terminated when switching to the normal mode or the standby mode.

The controller 170 may continuously variably control the voltage input to the controller 170 in the case that the low-power mode is not terminated.

If the controller 170 terminates the low-power mode, the controller 170 may change the output of the power supply circuit 190 (step S19).

In this case, the controller 170 may change it in the opposite way to what was changed in step S13. That is, if the controller 170 terminates the low-power mode, the controller 170 may control the power supply circuit 190 so that the output is changed from the second-magnitude AC voltage to the first-magnitude DC voltage.

Meanwhile, there may be various methods for variably controlling the voltage input to the controller 170 in step S15. The size of the voltage input to the SoC 510 may be adjusted to be small so as to reduce noise by reducing vibration in the MLCC 520. However, in the case that the size of the voltage input to the SoC 510 is small, the lifespan may be reduced due to semiconductor characteristics, and the like. Therefore, a method of variably controlling the voltage input to the controller 170 may be required by considering the state of the display device 100, the surrounding environment, and the like.

First, referring to FIGS. 9 and 10, a method for variably controlling a voltage input to a controller 170 according to the first embodiment of the present disclosure will be described.

FIG. 9 is a flowchart illustrating a method for variably controlling a voltage input to the controller by the display device according to a first embodiment of the present disclosure, and FIG. 10 is a diagram illustrating an example of a table used when operating in the method illustrated in FIG. 9.

According to the first embodiment, first, the controller 170 may obtain an ambient noise level (step S101).

The ambient noise level may be a measure of the noise level around the display device 100. The ambient noise level may be a step set according to the noise level around the display device 100 or the noise level around the display device 100.

According to one embodiment, the controller 170 may obtain the ambient noise level based on a voice input to the microphone 175. That is, the controller 170 may record the surrounding noise by turning on the microphone 175 for a predetermined period of time upon entering the low-power mode, and then obtain the surrounding noise level based on the recorded noise.

According to another embodiment, the controller 170 may receive the voice input into the microphone 290 provided in the remote-control device 200 from the remote-control device 200 to obtain the surrounding noise level. Specifically, the controller 170 may transmit a noise acquisition command to the remote-control device 200 upon entering the low-power mode, and the remote-control device 200 may record the surrounding noise by turning on the microphone 290 for a predetermined period of time upon receiving the noise acquisition command and transmit it to the display device 100. The controller 170 may obtain the surrounding noise level based on the noise information received from the remote-control device 200.

Meanwhile, the display device 100 may store a table that maps voltage values according to the ambient noise level in advance in the memory 140.

Therefore, the controller 170 may obtain the ambient noise level, obtain the voltage value mapped to the ambient noise level from the table (step S103), and adjust the amplitude of the voltage supplied to the controller 170 to the obtained voltage value (step S105).

When the ambient noise level is the first level, the controller 170 may adjust the voltage amplitude input to the controller 170 to the first value, and when the ambient noise level is the second level greater than the first level, the voltage amplitude input to the controller may be adjusted to the second value greater than the first value. In addition, at this time, the table that maps voltage values corresponding to each of a plurality of ambient noise levels stored in the memory 140 may be used.

FIG. 10 illustrates an example of a table that maps voltage values according to an ambient noise level. According to the example of FIG. 10, the table in which a voltage value of 0.705 V is mapped to the ambient noise level of 0 to 2 dB, a voltage value of 0.730 V is mapped to the ambient noise level of 3 to 5 dB, a voltage value of 0.771 V is mapped to the ambient noise level of 6 to 8 dB, and a voltage value of 0.796 V is mapped to the ambient noise level of 9 to 10 dB may be stored in the memory 140. In addition, as illustrated in FIG. 10, the table may have signals 1 and 2 mapped together with voltage values to ambient noise levels. The signals 1 and 2 may be signals applied to the converter 535 so that voltage is supplied to the SoC 510 with the mapped voltage values. That is, FIG. 10 may be a table showing that when the ambient noise level is 0 to 2, a voltage of 0.705 V is supplied to the SoC 510 as the LL signal is applied to the converter 535, ..., when the ambient noise level is 9 to 10, a voltage of 0.796 V is supplied to the SoC 510 as the HH signal is applied to the converter 535. Accordingly, the controller 170 may control the voltage size of the LL signal output to the converter 535 to the SoC 510 to 0.705 V when the ambient noise level is 0 to 2 dB, control the voltage size of the LH signal output to the converter 535 to the SoC 510 to 0.730 V when the ambient noise level is 3 to 5 dB, control the voltage size of the HL signal output to the converter 535 to the SoC 510 to 0.771 V when the ambient noise level is 6 to 8 dB, and control the voltage size of the HH signal output to the converter 535 to the SoC 510 to 0.796 V when the ambient noise level is 9 to 10 dB.

In summary, the controller 170 may control the converter 535 so that the smaller voltage is supplied to the SoC 510 based on the table as the ambient noise level decreases.

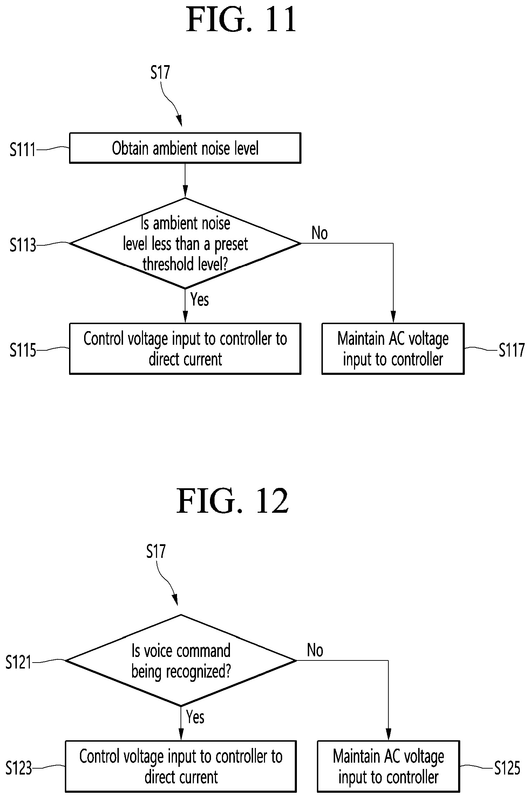

Next, FIG. 11 is a flowchart illustrating a method for variably controlling a voltage input to the controller by the display device according to a second embodiment of the present disclosure.

The controller 170 may obtain an ambient noise level (step S111).

This is the same as step S101 of FIG. 9, and thus, a repeated description will be omitted.

The controller 170 may determine whether the ambient noise level is less than a preset threshold level (step S113).

The threshold level may be set in various ways depending on the type of the display device 100, the installation environment, and the like. For example, the threshold level may be 5 dB, but this is merely exemplary, and therefore, it is reasonable that it is not limited thereto.

The controller 170 may control the voltage input to the controller 170 to direct current when the ambient noise level is below a preset threshold level (step S115), and may maintain the AC voltage input to the controller 170 when the ambient noise level is the threshold level or greater (step S117).

Alternatively, the controller 170 may control the amplitude of the AC voltage input to the controller 170 to the first voltage value when the ambient noise level is below a preset threshold level, and may control the size of the AC voltage input to the controller 170 to the second voltage value greater than the first voltage value when the ambient noise level is the threshold level or greater.

As described above, according to the first and second embodiments, the controller 170 may vary the voltage input to the controller 170 based on the ambient noise level when operating in the low-power mode. Through this, when the surroundings are quiet, the size of the voltage supplied to the SoC 510 may be lowered or changed to direct current to reduce noise in the main board 500, thereby minimizing user inconvenience.

Next, FIG. 12 is a flowchart illustrating a method for controlling a voltage input to the controller by the display device according to a third embodiment of the present disclosure.

According to the third embodiment, the controller 170 may obtain whether a voice command is being recognized (step S121).

Specifically, the controller 170 may recognize a voice command through the microphone 175 or the microphone 290 of the remote-control device 200. Therefore, the controller 170 may obtain whether a voice command is being recognized. When a voice command is being recognized, noise reduction may be required to improve the accuracy of voice recognition. Therefore, the controller 170 may vary the voltage input to the controller 170 based on whether a voice command is being recognized.

The controller 170 may control the voltage input to the controller 170 to direct current when a voice command is being recognized (step S123), and may maintain the AC voltage input to the controller 170 when the voice command is not being recognized (step S125).

Alternatively, the controller 170 may control the size of the AC voltage input to the controller 170 to the first voltage value when a voice command is being recognized, and may control the size of the AC voltage input to the controller 170 to the second voltage value greater than the first voltage value when the voice command is not being recognized.

As described above, according to the third embodiment, the controller 170 may vary the voltage input to the controller 170 based on whether or not the voice command is being recognized when operating in the low-power mode. Through this, when the voice command is being recognized, the size of the voltage supplied to the SoC 510 may be lowered or changed to direct current to reduce noise in the main board 500, thereby improving the accuracy of voice recognition.

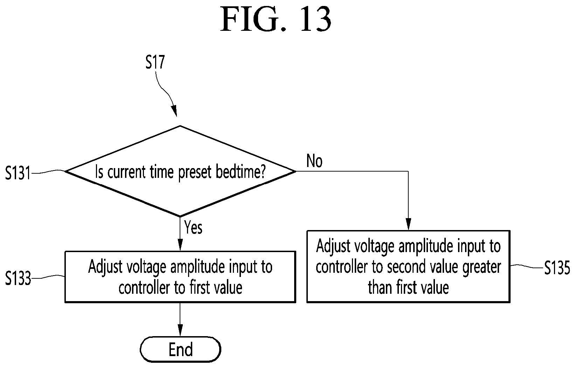

Next, FIG. 13 is a flowchart illustrating a method for variably controlling a voltage input to the controller by the display device according to a fourth embodiment of the present disclosure.

According to the fourth embodiment, the controller 170 may obtain whether the current time is a preset bedtime (step S131).

The controller 170 may set the bedtime in advance. The controller 170 may set the bedtime through a user input for setting the bedtime through the user input interface 150. Or, the controller 170 may set the bedtime according to a default value (e.g., 00:00 to 08:00). In this way, the controller 170 may set the bedtime in various ways.

The controller 170 may determine whether the current time corresponds to the preset bedtime when operating in the low-power mode.

In the case that the current time is the preset bedtime, the controller 170 may adjust the voltage input to the controller 170 to the first value (step S133), and in the case that the current time is not the preset bedtime, the voltage input to the controller 170 may be adjusted to the second value greater than the first value (step S135).

Alternatively, in the case that the current time is the preset bedtime, the controller 170 may control the voltage input to the controller 170 to direct current, and in the case that the current time is not the preset bedtime, the controller 170 may maintain the AC voltage input to the controller 170.

As described above, according to the fourth embodiment, when the controller 170 operates in the low-power mode, the voltage input to the controller 170 may be varied based on the current time. Through this, in the case that the current time is the bedtime, the voltage supplied to the SoC 510 may be lowered or changed to direct current to reduce noise in the main board 500, thereby minimizing user inconvenience.

As described above, the controller 170 may reduce noise in the low-power mode according to various embodiments of the present disclosure.

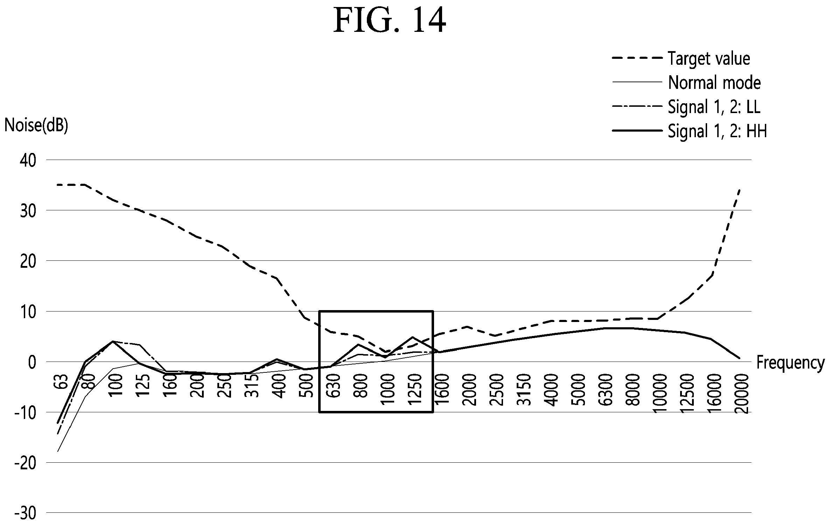

FIG. 14 is a graph illustrating noise measured when the display device operates according to various embodiments of the present disclosure.

In FIG. 14, the 'target value' may be a value set as the maximum noise allowable in the display device 100. The square box indicates an audible frequency band, and it is more important that the noise is controlled below the target value in the corresponding frequency band.

'Normal mode' may indicate noise measured when the display device 100 operates in normal mode. That is, it may be confirmed that the noise measured when the power supply circuit 190 outputs a DC voltage is always controlled below the target value.

Meanwhile, 'Signal 1,2: HH' is noise measured when the display device 100 outputs AC voltage without separate voltage value adjustment when operating in low-power mode, and it may be confirmed that it exceeds the target value in the frequency band of about 1050 to 1270 Hz.

However, 'Signal 1,2: LL' is noise measured when the voltage value is adjusted small for example, when adjusted to a voltage amplitude of 0.705 V according to FIG. 10 when operating in low-power mode, and it may be identified that it is controlled below the target value.

Through this, the display device 100 according to the embodiment of the present disclosure has the advantage of reducing noise by adjusting the voltage amplitude small depending on whether a specific condition is satisfied in low-power mode.

According to one embodiment of the present disclosure, the above-described method may be implemented as a code that may be read by a processor on a medium in which a program is recorded. Examples of media that may be read by the processor include ROM, RAM, CD-ROM, magnetic tape, floppy disk, optical data storage, and the like.

The display device described above is not limited to the configuration and method of the embodiments described above, and the embodiments may be configured by selectively combining all or part of each embodiment so that various modifications may be made.

## Claims

1. A display device (100) comprising:
a display (180);
a controller (170, 510) operating in a normal mode in which an image is output from the display (180) or in a low-power mode according to a power-off command;
a power supply circuit (190) configured to supply power to the display (180) and the controller (170, 510); and
a capacitor (520) provided between the power supply circuit (190) and the controller (170, 510),
wherein the controller (170, 510) is configured to:
terminate the normal mode, where the power supply circuit (190) outputs a direct current, DC, voltage of a first magnitude,
enter the low-power mode including changing the output of the power supply circuit (190) from the first magnitude DC voltage to an alternate current, AC, voltage of a second magnitude being smaller than the first magnitude, and
when operating in the low-power mode, vary a voltage output by the power supply circuit (190) and input to the controller (170, 510) based on an environment surrounding the display device (100) and/or a current time.

2. The display device (100) according to claim 1,
wherein the controller (170, 510) is configured to vary the voltage input to the controller (170, 510) based on an ambient noise level when operating in the low-power mode.

3. The display device (100) according to claim 2,
wherein the controller (170, 510) is configured to:
based on the ambient noise level being a first level, adjust a voltage amplitude of the AC voltage input to the controller (170, 510) to the first value, and
based on the ambient noise level being a second level higher than the first level, adjust the voltage amplitude of the AC voltage input to the controller (170, 510) to the second value greater than the first value.

4. The display device (100) according to claim 3, further comprising:
a memory (140) configured to store a table that maps voltage values of the AC voltage to be output by the power supply circuit (190) corresponding to each of a plurality of ambient noise levels.

5. The display device (100) according to claim 2,
wherein the controller (170, 510) is configured to:
change the voltage input to the controller (170, 510) to direct current based on the ambient noise level being below a preset threshold level, when operating in the low power mode, and
maintain the AC voltage input to the controller (170, 510) when the ambient noise level is the threshold level or greater.

6. The display device (100) according to claim 2,
wherein the controller (170, 510) is configured to obtain the ambient noise level by turning on a microphone (175) of the display device (100).

7. The display device (100) according to claim 2,
wherein the controller (170, 510) is configured to obtain the ambient noise level based on noise information recorded through a microphone (290) provided in a remote-control device (200).

8. The display device (100) according to claim 2,
wherein the controller (170, 510) is configured to
change the voltage input to the controller (170, 510) to direct current when a voice command is recognized through a microphone (175, 290), and
maintain the AC voltage input to the controller (170, 510) when a voice command is not recognized through the microphone (175, 290).

9. The display device (100) according to claim 1,
wherein the controller (170, 510) is configured to
adjust the voltage input to the controller (170, 510) to a first value when a current time is a preset bedtime, and
adjust the voltage input to the controller (170, 510) to a second value greater than the first value when the current time is not the preset bedtime.

## Patentansprüche

1. Anzeigevorrichtung (100), umfassend:
eine Anzeige (180);
eine Steuerung (170, 510), die in einem Normalmodus, in dem ein Bild von der Anzeige (180) ausgegeben wird, oder in einem Energiesparmodus gemäß einem Ausschaltbefehl arbeitet;
eine Stromversorgungsschaltung (190), die dazu eingerichtet ist, die Anzeige (180) und die Steuerung (170, 510) mit Strom zu versorgen; und
einen Kondensator (520), der zwischen der Stromversorgungsschaltung (190) und der Steuerung (170, 510) vorgesehen ist,
wobei die Steuerung (170, 510) eingerichtet ist zum:
Beenden des Normalmodus, in dem die Stromversorgungsschaltung (190) eine Gleichspannung, DC, einer ersten Größe ausgibt,
Eintreten in den Energiesparmodus, einschließlich des Umschaltens des Ausgangs der Stromversorgungsschaltung (190) von der Gleichspannung erster Größe auf eine Wechselspannung zweiter Größe, die kleiner ist als die erste Größe, und
Variieren, wenn sie im Energiesparmodus arbeitet, einer von der Stromversorgungsschaltung (190) ausgegebenen und an die Steuerung (170, 510) angelegten Spannung auf der Grundlage einer die Anzeigevorrichtung (100) umgebenden Umgebung und/oder einer aktuellen Zeit.

2. Anzeigevorrichtung (100) nach Anspruch 1,
wobei die Steuerung (170, 510) dazu eingerichtet ist, die an die Steuerung (170, 510) angelegte Spannung auf der Grundlage eines Umgebungsgeräuschpegels zu variieren, wenn sie im Energiesparmodus arbeitet.

3. Anzeigevorrichtung (100) nach Anspruch 2,
wobei die Steuerung (170, 510) eingerichtet ist zum:
Einstellen, auf der Grundlage, dass der Umgebungsgeräuschpegel einen ersten Pegel aufweist, einer Spannungsamplitude der an die Steuerung (170, 510) angelegten Wechselspannung auf den ersten Wert, und
Einstellen, auf der Grundlage, dass der Umgebungsgeräuschpegel ein zweiter Pegel ist, der höher ist als der erste Pegel, der Spannungsamplitude der an die Steuerung (170, 510) angelegten Wechselspannung auf den zweiten Wert, der größer ist als der erste Wert.

4. Anzeigevorrichtung (100) nach Anspruch 3, ferner umfassend:
einen Speicher (140), der dazu eingerichtet ist, eine Tabelle zu speichern, die Spannungswerte der von der Stromversorgungsschaltung (190) auszugebenden Wechselspannung entsprechend jedem einer Mehrzahl von Umgebungsgeräuschpegeln zuordnet.

5. Anzeigevorrichtung (100) nach Anspruch 2,
wobei die Steuerung (170, 510) eingerichtet ist zum:
Wechseln der an die Steuerung (170, 510) angelegte Spannung zu Gleichstrom, auf der Grundlage, dass der Umgebungsgeräuschpegel unter einem voreingestellten Schwellenwert liegt, wenn sie im Energiesparmodus betrieben wird, und
Aufrechterhalten der an die Steuerung (170, 510) angelegten Wechselspannung, wenn der Umgebungsgeräuschpegel den Schwellenwert erreicht oder überschreitet.

6. Anzeigevorrichtung (100) nach Anspruch 2,
wobei die Steuerung (170, 510) dazu eingerichtet ist, den Umgebungsgeräuschpegel durch Einschalten eines Mikrofons (175) der Anzeigevorrichtung (100) zu ermitteln.

7. Anzeigevorrichtung (100) nach Anspruch 2,
wobei die Steuerung (170, 510) dazu eingerichtet ist, den Umgebungsgeräuschpegel auf der Grundlage von Geräuschinformationen zu ermitteln, die über ein in einer Fernbedienung (200) vorgesehenes Mikrofon (290) aufgezeichnet werden.

8. Anzeigevorrichtung (100) nach Anspruch 2,
wobei die Steuerung (170, 510) eingerichtet ist zum
Wechseln der an die Steuerung (170, 510) angelegten Spannung auf Gleichstrom, wenn ein Sprachbefehl über ein Mikrofon (175, 290) erkannt wird, und
Beibehalten der an die Steuerung (170, 510) angelegten Wechselspannung, wenn kein Sprachbefehl über das Mikrofon (175, 290) erkannt wird.

9. Anzeigevorrichtung (100) nach Anspruch 1,
wobei die Steuerung (170, 510) eingerichtet ist zum
Einstellen der an die Steuerung (170, 510) angelegten Spannung auf einen ersten Wert, wenn die aktuelle Uhrzeit eine voreingestellte Schlafenszeit ist, und
Einstellen der an die Steuerung (170, 510) angelegten Spannung auf einen zweiten Wert, der größer ist als der erste Wert, wenn die aktuelle Uhrzeit nicht der voreingestellten Schlafenszeit entspricht.

## Revendications

1. Dispositif d'affichage (100), comprenant:
un écran (180);
un organe de commande (170, 510) fonctionnant en mode normal, dans lequel une image est affichée sur l'écran (180), ou en mode faible puissance, conformément à une commande de mise hors tension;
un circuit d'alimentation (190) conçu pour alimenter l'écran (180) et l'organe de commande (170, 510); et
un condensateur (520) intercalé entre le circuit d'alimentation (190) et l'organe de commande (170, 510),
dans lequel l'organe de commande (170, 510) est configuré pour:
mettre fin au mode normal, dans lequel le circuit d'alimentation (190) délivre une tension continue, CC, d'une première intensité,
passer en mode faible puissance, notamment en modifiant la sortie du circuit d'alimentation (190) pour passer d'une tension CC d'une première intensité à une tension alternative, CA, d'une seconde intensité inférieure à la première intensité, et
lorsqu'il fonctionne en mode faible puissance, modifier la tension délivrée par le circuit d'alimentation (190) et transmise à l'organe de commande (170, 510) en fonction de l'environnement entourant le dispositif d'affichage (100) et/ou de l'heure réelle.

2. Dispositif d'affichage (100) selon la revendication 1,
dans lequel l'organe de commande (170, 510) est configuré pour modifier la tension d'entrée de 'organe de commande (170, 510) en fonction du niveau de bruit ambiant lorsqu'il fonctionne en mode faible puissance.

3. Dispositif d'affichage (100) selon la revendication 2,
dans lequel l'organe de commande (170, 510) est configuré pour:
en fonction du niveau de bruit ambiant, qui correspond à un premier niveau, régler l'intensité de la tension CA d'entrée de l'organe de commande (170, 510) sur la première valeur, et
en fonction du niveau de bruit ambiant qui correspond à un deuxième niveau supérieur au premier niveau, ajuster l'intensité de la tension CA d'entrée de l'organe de commande (170, 510) à la deuxième valeur, supérieure à la première valeur.

4. Dispositif d'affichage (100) selon la revendication 3, comprenant en outre:
une mémoire (140) configurée pour stocker un tableau qui met en correspondance les valeurs de tension de la tension CA devant être délivrée par le circuit d'alimentation (190) avec chaque niveau d'une pluralité de niveaux de bruit ambiant.

5. Dispositif d'affichage (100) selon la revendication 2,
dans lequel l'organe de commande (170, 510) est configuré pour:
modifier la tension d'entrée de l'organe de commande (170, 510) pour passer en courant continu lorsque le niveau de bruit ambiant est inférieur à un niveau seuil prédéfini, en mode faible puissance, et
maintenir la tension d'entrée CA au niveau de l'organe de commande (170, 510) lorsque le niveau de bruit ambiant est supérieur ou égal au niveau seuil.

6. Dispositif d'affichage (100) selon la revendication 2,
dans lequel l'organe de commande (170, 510) est configuré pour obtenir le niveau de bruit ambiant en activant un microphone (175) du dispositif d'affichage (100).

7. Dispositif d'affichage (100) selon la revendication 2,
dans lequel l'organe de commande (170, 510) est configuré pour obtenir le niveau de bruit ambiant à partir des informations de bruit enregistrées par un microphone (290) intégré à une télécommande (200).

8. Dispositif d'affichage (100) selon la revendication 2,
dans lequel l'organe de commande (170, 510) est configuré pour
convertir la tension d'entrée de l'organe de commande (170, 510) en courant continu lorsqu'une commande vocale est reconnue par un microphone (175, 290), et
maintenir la tension d'entrée CA au niveau de l'organe de commande (170, 510) lorsqu'une commande vocale n'est pas reconnue par le microphone (175, 290).

9. Dispositif d'affichage (100) selon la revendication 1,
dans lequel l'organe de commande (170, 510) est configuré pour
ajuster la tension d'entrée de l'organe de commande (170, 510) sur une première valeur lorsque l'heure réelle correspond à une heure de coucher prédéfinie, et
ajuster la tension d'entrée de l'organe de commande (170, 510) sur une deuxième valeur supérieure à la première lorsque l'heure réelle ne correspond pas à l'heure de coucher prédéfinie.
